# FASCICULE DE BREVET EUROPEEN

(11) **EP 1 163 101 B1**
(45) Date de publication et mention de la délivrance du brevet: **22.01.2003**
(21) Numéro de dépôt: 00907720.7
(22) Date de dépôt: 24.02.2000
(51) Int. Cl.: B29C 49/56, B29C 33/20

(54) **UNITE DE MOULAGE COMPORTANT DES MOYENS DE COMPENSATION PERFECTIONNES ET MACHINE D'EXTRUSION-SOUFFLAGE MUNIE D'UNE TELLE UNITE**
FORMEINHEIT DIE EINE VERBESSERTE FORMSCHLIESSKLEMMEINRICHUNG AUFWEIST UND EXTRUSIONSBLASFORMMASCHINE WO DIESE FROMSCHLIESSKLEMMEINRICHTUNG VERWENDET WIRD
MOULDING UNIT COMPRISING IMPROVED COMPENSATING MEANS AND EXTRUSION-BLOW MOULDING MACHINE EQUIPPED THEREWITH

(30) Priorité: 08.03.1999 FR 9902929
(43) Date de publication de la demande: 19.12.2001
(73) Titulaire: SIDEL, 76053 Le Havre Cedex (FR)
(72) Inventeur: DEROUAULT, Philippe, F-76053 Le Havre Cedex (FR); LEMAISTRE, Eric, F-76053 Le Havre Cedex (FR)
(74) Mandataire: Siloret, Patrick
(86) Numéro de dépôt international: FR0000467
(87) Numéro de publication internationale: WO00053395

(56) Documents cités:
- WO-A-98/13191
- FR-A- 2 659 265
- US-A- 3 829 264
- US-A- 5 411 391

## Description

L'invention se rapporte au domaine des machines d'extrusion-soufflage d'articles en matériau thermoplastique, notamment pour la production de récipients tels que des bouteilles, des flacons ou des bidons.

Une telle machine comporte pour l'essentiel une tête d'extrusion qui produit au moins une paraison tubulaire de matière plastique, au moins une unité de moulage comprenant un moule en deux parties, les deux parties du moule étant amenées à se refermer sur la paraison encore molle en sortie de tête d'extrusion, et un poste de soufflage qui est muni de moyens pour injecter de l'air sous pression à l'intérieur de la paraison enfermée dans le moule. L'air sous pression permet de déformer la paraison pour qu'elle épouse la forme de la cavité du moule.

Dans certains cas, la machine comporte aussi un poste de décarottage, qui permet de découper le matériau excédentaire.

L'invention se rapporte plus particulièrement à une unité de moulage pour une telle machine. Cette unité de moulage comporte un moule en deux parties dans lequel chaque demi-moule est porté par un support mobile. Les deux supports mobiles sont déplacés relativement l'un à l'autre selon une trajectoire sensiblement transversale au plan de joint du moule. Dans une position ouverte, les deux demi-moules sont dégagés transversalement l'un de l'autre pour permettre l'introduction d'une ébauche de l'article, à savoir une paraison, dans une cavité délimitée entre les deux demi-moules. Dans une position fermée, les deux demi-moules sont en appui l'un contre l'autre par leurs faces avant en vis-à-vis et les supports sont liés l'un à l'autre par des moyens de verrouillage.

Les deux supports peuvent être mobiles en translation selon la direction transversale, mais ils peuvent aussi être mobiles en rotation, par exemple autour d'un axe commun parallèle au plan de joint des deux demi-moules.

Bien entendu, l'unité de moulage comporte un mécanisme de déplacement d'au moins un des deux supports de moules. Ce mécanisme est adapté à la trajectoire relative des deux supports entre leurs positions ouverte et fermée.

Dans les machines d'extrusion soufflage, il est parfois prévu que l'unité de moulage comporte, entre au moins l'un des demi-moules et le support associé, des moyens de compensation à pression de fluide qui poussent transversalement le demi-moule en direction de l'autre demi-moule.

Ces moyens de compensation permettent d'éviter que les deux demi-moules ne puissent s'écarter l'un de l'autre sous l'effet de la pression de soufflage. Ils permettent aussi de plaquer les faces avant des deux demi-moules l'une contre l'autre en dépit de la présence de la matière excédentaire qui est pincée entre les deux demi-moules au moment de la fermeture. Or, dans certains cas, la force nécessaire pour "écraser" et prédécouper cette matière excédentaire est très importante. Ils dépendent aussi de la quantité de matière pincée entre les deux moules.

Une machine d'extrusion soufflage incorporant ces caractéristiques est décrite par exemple dans le document US-A-5.730.927.

Dans ce document, on peut voir que les moyens de compensation sont réalisés sous la forme de vérins hydrauliques, la machine étant en l'occurrence équipée de moyens de compensation; au niveau des deux supports. Un inconvénient d'un vérin est qu'il n'exerce qu'une action ponctuelle sur le demi-moule. Or, vu les efforts de compensation mis en oeuvre, une action ponctuelle ne peut avoir que pour conséquence de provoquer une déformation au moins locale du demi-moule. Aussi, pour obtenir une certaine répartition de l'effort de compensation, il est prévu, entre chaque support et le demi-moule associé, six vérins qui permettent de limiter les déformations du demi-moule.

Cependant, les actions des vérins n'en restent pas moins des actions ponctuelles, et le demi-moule doit donc présenter une rigidité relativement importante pour que la force d'appui du demi-moule sur l'autre demi-moule soit à peu près homogène sur toute la surface du plan de joint des deux demi-moule.

De plus, ce nombre important de vérins est pénalisant en termes de coûts et d'implantation.

L'invention a donc plus particulièrement pour objet de proposer une nouvelle conception des moyens de compensation qui permette d'obtenir, avec un dispositif simple et de faible coût, une très bonne répartition des efforts de compensation sur toute la surface du moule.

Dans ce but, l'invention propose une unité de moulage du type décrit précédemment, caractérisée en ce que les moyens de compensation à pression de fluide sont réalisés sous la forme d'un coussin souple gonflable interposé entre une face arrière du demi-moule considéré et une face avant du support associé.

Selon d'autres caractéristiques de l'invention :
- en projection transversale, le coussin s'étend de manière à recouvrir sensiblement toute la surface de la projection transversale du demi-moule ;
- lorsque les supports sont en position fermée, l'unité de moulage est apte à procéder au soufflage, et le coussin gonflable commande le déplacement du demi-moule de sa position reculée vers sa position avancée après le verrouillage des deux supports en position fermée ;
- les demi-moules sont munis de moyens de prédécoupe qui, lorsque le demi-moule est en position avancée, effectuent une prédécoupe de la paraison en fonction du contour de l'article à former ;
- le demi-moule comporte des moyens commandés de rappel du demi-moule vers sa position reculée ;
- les moyens de rappel comportent un coussin souple gonflable auxiliaire ; et
- les moyens de rappel comportent un étrier qui est agencé du côté externe du support et qui porte, à ses deux extrémités opposées, des doigts de liaison qui s'étendent au travers de lumières oblongues aménagées dans des faces latérales du support pour être liés au demi-moule, et le coussin auxiliaire est interposé entre l'étrier et une face arrière du support.

L'invention propose aussi une machine d'extrusion-soufflage, caractérisée en ce qu'elle comporte au moins une unité de moulage incorporant l'une quelconque des caractéristiques précédentes.

D'autres caractéristiques et avantages de l'invention apparaîtront à la lecture de la description détaillée qui suit ainsi que dans les dessins annexés dans lesquels :
- la figure 1 est une vue schématique en perspective illustrant une unité de moulage conforme aux enseignements de l'invention ;
- la figure 2 est une vue en perspective éclatée, selon un autre angle de vue, de la partie de l'unité de moulage qui porte les moyens de compensation ; et
- les figures 3 et 4 sont des vues en coupe par un plan transversal illustrant les deux positions avancées et reculées du demi-moule.

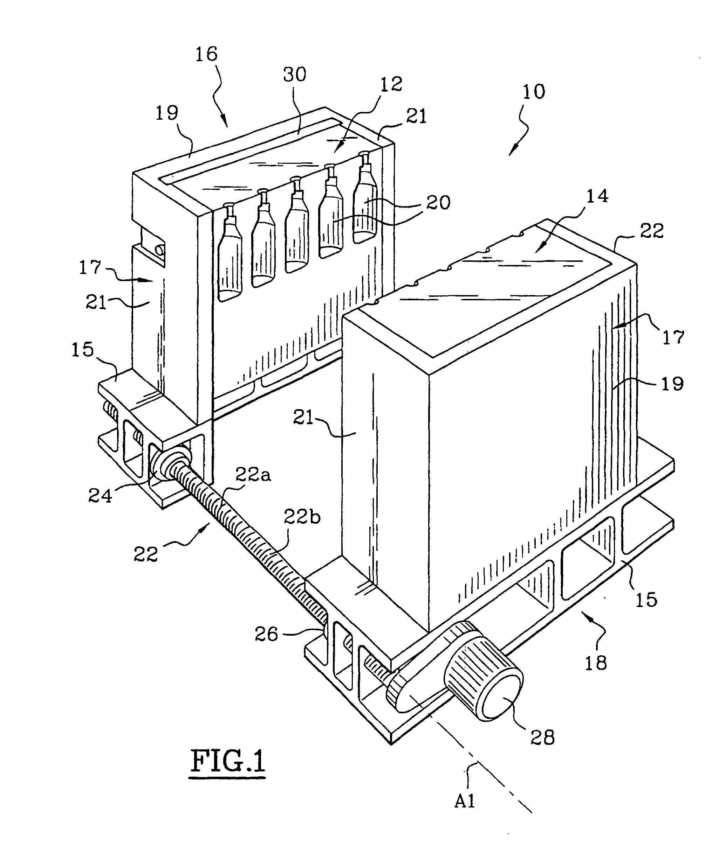

On a illustré de manière schématique sur la figure 1 une unité de moulage 10 pour une machine d'extrusion-soufflage. L'unité 10 comporte pour l'essentiel deux demi-moules 12, 14 dont chacun est porté par un support 16, 18. Les deux supports sont mobiles selon un axe transversal perpendiculaire au plan de joint des deux demi-moules 12, 14, entre une position fermée et une position ouverture illustrée à la figure 1. En l'occurrence, les supports 16, 18 sont montés à coulissement sur des rails (non représentés). Les deux supports 16, 18 comportent chacun une embase 15 sur laquelle est monté un porte-moule 17 qui présente une plaque arrière 19 et deux rebords latéraux 21. La plaque arrière 19 et les deux rebords 21 délimitent ainsi un espace ouvert vers l'avant dans lequel est reçu le demi-moule associé.

Les deux faces avant en regard des deux demi-moules 12, 14 comportent une ou plusieurs demi-cavités 20 qui, lorsque le moule est fermé, définissent une ou plusieurs cavités à la forme de l'article à former. Dans le texte, les notions d'avant et d'arrière se rapportent au demi-moule considéré.

Pour commander les déplacements relatifs des deux supports 16, 18, l'unité 10 est munie d'un mécanisme de type vis/écrou comportant une vis 22 d'axe transversal A1 et deux écrous à billes dont l'un 24 est solidaire d'un premier 16 des supports et l'autre 26 du deuxième support 18. La vis 22 est fixe transversalement par rapport à un châssis qui porte l'unité de moulage 10, et elle comporte deux tronçons filetés 22a et 22b qui présentent des pas de vis dont les sens d'enroulement sont inverses l'un de l'autre. L'écrou 24 du premier support coopère avec un premier 22a des tronçons tandis que l'écrou 26 du second support coopère avec l'autre tronçon 22b. De la sorte, lorsque la vis 22 est entraînée en rotation autour de son axe A1 par un moteur 28, les deux supports 16, 18 sont commandés simultanément en translation selon des sens opposés. Si la valeur de pas des deux tronçons filetés est la même, les deux supports 16, 18 se déplacent sur une distance égale.

Ce mécanisme est particulièrement avantageux car il comporte un nombre réduit de pièces tout en garantissant une grande précision et une parfaite reproductibilité des déplacements simultanés des deux supports. De plus, l'utilisation d'écrous à billes permet d'obtenir d'une part un bon rendement énergétique et d'autre part des déplacements avec de grandes vitesses et de fortes accélérations.

L'unité de moulage 10 est donc destinée à être amenée en position moule ouvert sous une unité d'extrusion comportant autant de filières d'extrusion que le moule comporte de cavités. Lorsque la paraison extrudée par chaque tête a atteint la longueur voulue, le moule est refermé pour emprisonner, dans chaque cavité, un tronçon de paraison. Le moule est alors fermé par le mécanisme vis/écrous, et les deux supports sont accrochés l'un à l'autre par des moyens de verrouillage (non représentés) agencés par exemple au niveau des bords avant des rebords 21. Ensuite, l'unité de moulage est destinée à coopérer avec une unité de soufflage pour injecter un fluide sous pression à l'intérieur des paraisons emprisonnées dans chaque cavité afin de mouler la paraison à la forme de la cavité.

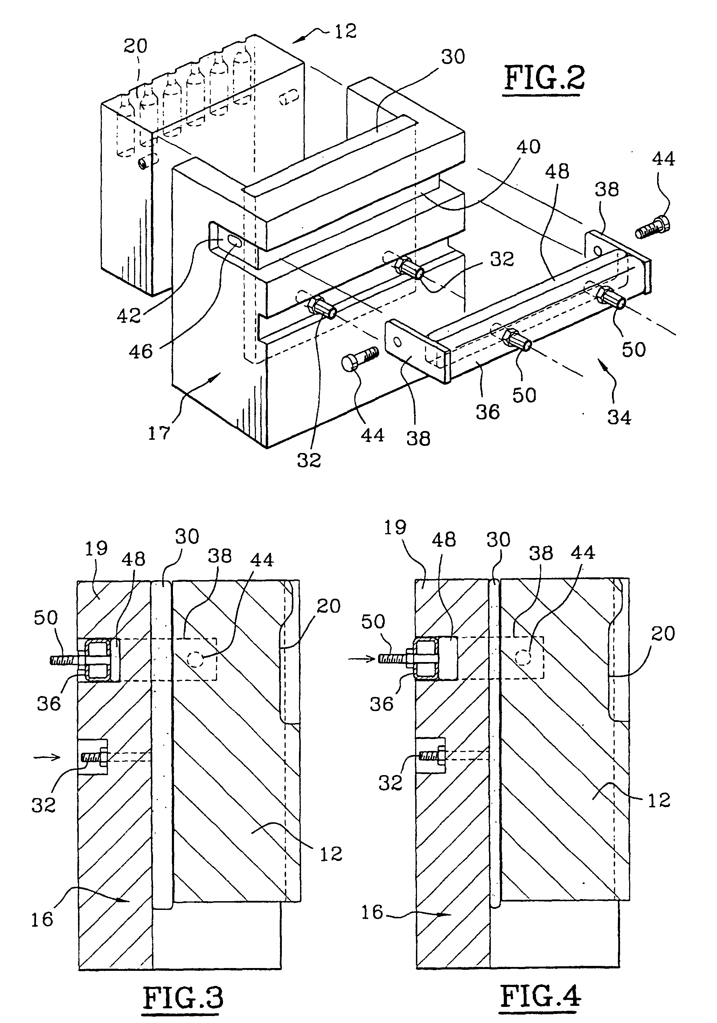

Pour compenser la tendance à l'écartement des demi-moules sous l'action du fluide de soufflage et pour les plaquer efficacement l'un contre l'autre, l'unité de moulage selon l'invention comporte des moyens de compensation à pression de fluide qui sont interposés transversalement entre le support et le demi-moule associé pour repousser le demi-moule considéré en direction de l'autre demi-moule. Bien entendu, le demi-moule est alors monté mobile en coulissement selon la direction transversale par rapport au support associé entre une position reculée illustrée à la figure 4 et une position avancée illustrée à la figure 3. Dans la pratique, on prévoit que la course transversale maximale du demi-moule 12 par rapport au support 16 soit de l'ordre du centimètre.

Dans l'exemple de réalisation proposé, il est prévu des moyens de compensation uniquement entre le premier support 16 et le demi-moule 12 associé. Le second demi-moule 14 est fixé rigidement sur le second support 18.

Conformément à un premier aspect de l'invention, les moyens de compensation sont formés d'un coussin souple gonflable 30 qui est agencé entre la plaque arrière 19 du support 16 et une face arrière du demi-moule 12. Le coussin 30 présente donc une forme sensiblement rectangulaire et une épaisseur transversale relativement faible par rapport à ses autres dimensions si bien qu'il comporte deux faces principales, avant et arrière, qui s'appuient respectivement sur la plaque arrière du support 16 et sur la face arrière du demi-moule 12. Lorsqu'on le gonfle, le coussin 30 se déforme, essentiellement au niveau de ses faces avant et arrière, de telle sorte que son épaisseur transversale tend à augmenter en poussant le demi-moule 12 vers l'avant.

On notera que le coussin 30 présente une superficie sensiblement égale, voire supérieure, à celle du demi-moule. En effet, on peut remarquer que le coussin déborde légèrement par rapport à la face arrière du demi-moule, au moins sur trois côtés. De la sorte, en gonflant le coussin 30 avec un fluide à une pression sensiblement égale ou supérieure à celle du fluide de soufflage, l'action résultante de ces deux fluides sur le demi-moule est une action qui le sollicite en direction de l'autre demi-moule 14.

Bien entendu, on utilise de préférence la même source de fluide pour le soufflage des articles et pour le gonflage du coussin 30. Toutefois, la pression de soufflage peut être inférieure à la pression injectée dans le coussin 30.

De préférence, on gonfle le coussin 30 avant de procéder au soufflage. Toutefois, dans certains cas, le coussin sera gonflé en même temps qu'est effectué le soufflage.

Dans le cadre de l'extrusion-soufflage, on utilise généralement des pressions de soufflage de l'ordre d'une dizaine de bars. Aussi, lorsque le moule comporte une cavité de grande taille ou plusieurs cavités, les forces mises en jeu par les pressions de fluides peuvent être très importantes. Toutefois, le fait d'utiliser un coussin souple permet de s'assurer que la pression de compensation est répartie de manière uniforme sur toute la face arrière du demi-moule. De la sorte la force d'appui du premier demi-moule 12 sur le second 14 est uniformément répartie sur tout le plan de joint du moule, cela sans que l'on ait besoin d'utiliser des demi-moules ni des porte-moules particulièrement rigides, ce qui permet notamment d'en diminuer le coût.

L'utilisation d'un moule plus léger permet de réduire l'inertie des pièces en mouvement de l'unité de moulage, laquelle se trouve donc particulièrement bien adaptée aux machines à grandes cadences dans lesquelles on cherche à minimiser les temps d'ouverture et de fermeture du moule par des mouvements à grandes vitesses et à forte accélération.

Pour assurer un parfait équilibre de l'action de compensation, notamment en début de gonflage, le coussin 30 est pourvu de deux ports d'alimentation 32 décalés longitudinalement, ces deux ports étant toutefois alimentés simultanément par un même circuit. On évite ainsi toute possibilité de déséquilibre latéral de l'action des moyens de compensation, et donc tout risque de coincement par arc-boutement. De préférence, les ports d'alimentation 32 débouchent à l'arrière du support 16, au travers de la plaque arrière 19, et ils sont agencés sensiblement à mi-hauteur du coussin 30.

Le fait d'avoir une pression uniformément répartie sur tout le moule permet par ailleurs d'améliorer de manière importante la qualité de la prédécoupe des bavures. En effet, la plupart des moules comportent, autour des demi-cavités 20 de chaque demi-moule 12, 14, des zones de prédécoupe (non représentées) qui ont pour fonction de faciliter l'ébavurage, qui est effectué ultérieurement au niveau d'une unité de décarottage. Ces zones, également appelées couteaux, effectuent donc une prédécoupe de la matière excédentaire qui entoure le ou les articles finis, et elles sont formées d'éléments en reliefs sur la face interne de l'un des demi-moules qui coopèrent avec des éléments complémentaires de l'autre demi-moule.

Or, du fait de la très bonne répartition de la pression de contact au niveau du plan de joint, on obtient une prédécoupe très uniforme et régulière le long de tout le contour du ou des articles. Par rapport aux systèmes connus de compensation, on évite ainsi que, à certains endroits, la prédécoupe ne soit en fait une découpe totale, au risque de voir des chutes de matière rester dans le moule, tandis qu'à d'autres endroits la prédécoupe serait insuffisante.

Ainsi, avec une unité de moulage selon l'invention, on peut décomposer la fermeture du moule en trois étapes successives dans lesquelles interviennent trois organes différents. Dans un premier temps, le déplacement des supports de moule est assuré par la vis d'entraînement 22. Ensuite, les moyens de verrouillage (non représentés) rendent les deux supports 16, 18 solidaires l'un de l'autre. Enfin, le coussin de compensation 30 plaque les deux demi-moules 12, 14 l'un contre l'autre avec une force telle qu'elle permet la prédéco,upe de la matière excédentaire et qu'elle permet d'éviter l'écartement des deux demi-moules 12, 14 au cours de l'opération ultérieure de soufflage.

Selon un autre aspect de l'invention, il est prévu des moyens commandés de rappel du demi-moule vers sa position reculée, ces moyens étant plus particulièrement visibles sur la figure 2.

L'unité de moulage comporte ainsi un étrier de rappel 34 comportant pour l'essentiel une barre longitudinale 36 munie à chacune de ses extrémités d'un bras transversal 38 qui s'étend transversalement vers l'avant. La barre longitudinale 36 est reçue dans une gorge 40 formée dans la face arrière du porte-moule 17 tandis que les bras 38 sont reçus dans des gorges 42 agencées dans les rebords 21. A leur extrémité avant libre, les bras 38 comportent chacun un doigt de liaison 44 qui s'étend au travers d'une lumière transversale 46 formée dans le rebord 21 correspondant. Les doigts 44 sont fixés chacun sur l'un des côtés du demi-moule de telle sorte que le demi-moule 12 et l'étrier 34 sont solidaires l'un de l'autre en déplacement, selon une direction transversale. Dans l'exemple proposé, les doigts de liaison 44 sont réalisés sous la forme de vis destinées à être vissées directement dans le demi-moule 12.

La longueur transversale des lumières 46 correspond à la course maximale du demi-moule entre ses positions reculée et avancée de sorte que les extrémités des lumières forment des butées de sécurité pour les doigts de liaison 44, et donc pour le demi-moule 12.

Ainsi, l'étrier 34 suit les mouvements transversaux du demi-moule 12. Or, selon l'invention, on a prévu un coussin gonflable auxiliaire 48 qui est interposé entre la barre 36 et le fond de la gorget 40 dans laquelle la barre 36 est reçue. Tant que le coussin souple auxiliaire 48 n'est pas gonflé, le coussin principal 30 peut amener le demi-moule 12 vers sa position avancée principal 30 tel qu'illustré à la figure 3.

Toutefois, lorsqu'on cesse d'alimenter le coussin principal 30 en fluide sous pression, on peut alors alimenter le coussin auxiliaire 48 en fluide sous pression tel que cela est illustré à la figure 4. Celui-ci, en se gonflant, repousse la barre 36 vers l'arrière de telle sorte que l'étrier 34 ramène le demi-moule 12 vers sa position reculée, par l'intermédiaire des doigts de liaison 44.

Il est particulièrement avantageux de prévoir des moyens de rappel commandés plutôt que d'utiliser, comme cela est connu jusqu'à présent, des moyens de rappel élastiques du type ressort. En effet, lorsqu'on utilise des ressorts pour ramener le demi-moule 12 vers sa position reculée, les moyens de compensation, quelle que soit leur nature, doivent lutter contre l'effort résistant imposé par les ressorts pour amener le demi-moule vers sa position avancée. Cela conduit inévitablement à un surdimensionnement des moyens de compensation.

Les moyens de rappel commandés au sens de l'invention peuvent être réalisés sous une autre forme que celle décrite plus haut. Ils peuvent ainsi par exemple être réalisés sous la forme de vérins hydrauliques ou électriques ou sous la forme d'électroaimants.

Toutefois, dans la mesure où les moyens de compensation sont réalisés sous la forme d'un coussin gonflable, il est intéressant d'utiliser des moyens de rappel commandé utilisant le même type de source d'énergie, à savoir en l'occurrence un fluide sous pression. Là encore, la réalisation sous la forme d'un coussin permet d'assurer un effort de rappel parfaitement symétrique permettant d'éviter tout risque de coincement du demi-moule 12 par rapport au support 16, notamment en prévoyant, comme dans le cas du coussin principal 30, deux ports d'alimentations 50 qui sont décalés longitudinalement et qui débouchent vers l'arrière au travers de la barre 36 de l'étrier 34.

## Revendications

1. Unité de moulage pour une machine d'extrusion-soufflage d'articles en matériau thermoplastique, du type dans lequel l'unité de moulage (10) comporte un moule en deux parties, chaque demi-moule (12, 14) étant porté par un support (16, 18), du type dans lequel les deux supports (16, 18) sont susceptibles d'être déplacés relativement l'un à l'autre entre une position ouverte dans laquelle les deux demi-moules (12, 14) sont dégagés transversalement l'un de l'autre pour permettre l'introduction d'une paraison dans une cavité (20) délimitée entre les deux demi-moules (12, 14), et une position fermée dans laquelle les deux demi-moules (12, 14) sont en appui l'un contre l'autre par leurs faces avant en vis-à-vis et dans laquelle les supports (16, 18) sont liés l'un à l'autre par des moyens de verrouillage, et du type dans lequel l'unité de moulage (10) comporte, entre au moins l'un des demi-moules (12) et le support (16) associé, des moyens de compensation à pression de fluide qui poussent transversalement le demi-moule (12) d'une position reculée vers une position avancée, en direction de l'autre demi-moule (14),
**caractérisée en ce que** le demi-moule (12) comporte des moyens commandés (48) de rappel du demi-moule (12) vers sa position reculée.

2. Unité de moulage selon la revendication 1, **caractérisée en ce que** les moyens de rappel comportent un coussin souple gonflable auxiliaire (48).

3. Unité de moulage selon la revendication 2, **caractérisée en ce que** les moyens de rappel comportent un étrier (34) qui est agencé du côté externe du support (16) et.qui porte, à ses deux extrémités opposées, des doigt de liaison (44) qui s'étendent au travers de lumières oblongues (46) aménagées dans des faces latérales (21) du support pour être liés au demi-moule (12), et **en ce que** le coussin auxiliaire (48) est interposé entre l'étrier (34) et une face arrière du support (16).

4. Unité de moulage selon l'une quelconque des revendications précédentes, **caractérisée en ce que** les moyens de compensation à pression de fluide sont réalisés sous la forme d'un coussin souple gonflable (30) interposé entre une face arrière du demi-moule (12) considéré et une face avant du support associé (16).

5. Unité de moulage selon la revendication 4, **caractérisée en ce que**, en projection transversale, le coussin (30) s'étend de manière à recouvrir sensiblement toute la surface de la projection transversale du demi-moule (12).

6. Unité de moulage selon l'une quelconque des revendications 4 ou 5, **caractérisée en ce que**, lorsque les supports (16, 18) sont en position fermée, l'unité de moulage (10) est apte à procéder au soufflage, et **en ce que** le coussin gonflable (30) commande le déplacement du demi-moule (12) de sa position reculée vers sa position avancée après le verrouillage des deux supports (1 6, 18) en position fermée.

7. Unité de moulage selon l'une quelconque des revendications précédentes, **caractérisée en ce que** les demi-moules (12,14) sont munis de moyens de prédécoupe qui, lorsque le demi-moule (12) est en position avancée, effectuent une prédécoupe de la paraison en fonction du contour de l'article à former.

8. Machine d'extrusion-soufflage, **caractérisée en ce qu'**elle comporte au moins une unité de moulage (10) conforme à l'une quelconque des revendications précédentes.

## Patentansprüche

1. Formeinheit für eine Maschine zum Extrusionsblasformen von Artikeln aus thermoplastischem Material, jener Art, bei der die Formeinheit (10) eine zweiteilige Blasform umfasst, wobei jede Formhälfte (12, 14) von einem Träger (16, 18) getragen wird, jener Art, bei der die beiden Träger (16, 18) bezüglich einander zwischen einer geöffneten Stellung, in der die beiden Formhälften (12, 14) in Querrichtung voneinander ausgerückt werden können, um die Einführung eines Vorformlings in eine zwischen den beiden Formhälften (12, 14) begrenzte Höhlung (20) zu gestatten, und einer geschlossenen Stellung, in der die beiden Formhälften (12, 14) durch ihre gegenüberliegenden Vorderseiten aneinander anliegen und in der die Träger (16, 18) durch Verriegelungsmittel miteinander verbunden sind, bewegt werden können, und jener Art, bei der die Formeinheit (10) zwischen mindestens einer der Formhälften (12) und dem zugehörigen Träger (16) Fluiddruckausgleichsmittel enthält, die die Formhälfte (12) in Querrichtung aus einer zurückgesetzten Stellung in eine vorgerückte Stellung in Richtung der anderen Formhälfte (14) schieben,
**dadurch gekennzeichnet, dass** die Formhälfte (12) gesteuerte Mittel (48) zur Rückstellung der Formhälfte (12) in ihre zurückgesetzte Stellung umfasst.

2. Formeinheit nach Anspruch 1, **dadurch gekennzeichnet, dass** die Rückstellmittel ein aufblasbares, flexibles Zusatzkissen (48) umfassen.

3. Formeinheit nach Anspruch 2, **dadurch gekennzeichnet, dass** die Rückstellmittel einen Bügel (34) umfassen, der auf der Außenseite des Trägers (16) angeordnet ist und an seinen beiden einander gegenüberliegenden Enden Verbindungszapfen (44) trägt, die sich zur Verbindung mit der Formhälfte (12) durch in den Seitenflächen (21) des Trägers ausgebildete Längsöffnungen (46) erstrecken, und dass das Zusatzkissen (48) zwischen dem Bügel (34) und einer Rückseite des Trägers (16) angeordnet ist.

4. Formeinheit nach einem der vorhergehenden Ansprüche, **dadurch gekennzeichnet, dass** die Fluiddruckausgleichsmittel in Form eines aufblasbaren flexiblen Kissens (30) ausgeführt sind, das zwischen einer Rückseite der betreffenden Formhälfte (12) und einer Vorderseite des zugeordneten Trägers (16) angeordnet ist.

5. Formeinheit nach Anspruch 4, **dadurch gekennzeichnet, dass** sich das Kissen (30) in Querprojektion so erstreckt, dass es im Wesentlichen die ganze Fläche der Querprojektion der Formhälfte (12) bedeckt.

6. Formeinheit nach Anspruch 4 oder 5, **dadurch gekennzeichnet, dass** die Formeinheit (10), wenn sich die Träger (16, 18) in geschlossener Stellung befinden, einen Blasformvorgang durchführen kann und dass das aufblasbare Kissen (30) nach dem Verriegeln der beiden Träger (16, 18) in geschlossener Stellung die Bewegung der Formhälfte (12) aus ihrer zurückgesetzten Stellung in ihre vorgerückte Stellung steuert.

7. Formeinheit nach einem der vorhergehenden Ansprüche, **dadurch gekennzeichnet, dass** die Formhälften (12, 14) mit Vorschneidmitteln versehen sind, die ein Vorschneiden des Vorformlings in Abhängigkeit von der Kontur des herzustellenden Artikels durchführen, wenn sich die Formhälfte (12) in vorgerückter Stellung befindet.

8. Extrusions-Blasformmaschine, **dadurch gekennzeichnet, dass** sie mindestens eine Formeinheit (10) gemäß einem der vorhergehenden Ansprüche enthält.

## Claims

1. Moulding unit for a machine for the extrusion/blow moulding of items made of thermoplastic, of the type in which the moulding unit (10) comprises a two-part mould, each half-mould (12, 14) being carried by a support (16, 18), of the type in which the two supports (16, 18) can be moved relative to one another between an open position in which the two half-moulds (12, 14) are transversely clear of one another to allow a parison to be introduced into a cavity (20) delimited between the two half-moulds (12, 14), and a closed position in which the two half-moulds (12, 14) press against each other via their opposing front faces and in which the supports (16, 18) are connected together by locking means, and of the type in which the moulding unit (10) comprises, between at least one of the half-moulds (12) and the associated support (16), fluid-pressure compensating means which push the half-mould (12) transversely from a retreated position towards a forward position, towards the other half-mould (14), **characterized in that** the half-mould (12) comprises commanded means (48) of returning the half-mould (12) to its retreated position.

2. Moulding unit according to Claim 1, **characterized in that** the return means comprise an auxiliary inflatable flexible cushion (48).

3. Moulding unit according to Claim 2, **characterized in that** the return means comprise a yoke (34) which is arranged on the outside of the support (16) and which, at its two opposed ends, carries connecting fingers (44) which extend through oblong slots (46) made in lateral faces (21) of the support to be connected to the half-mould (12), and **in that** the auxiliary cushion (48) is inserted between the yoke (34) and a rear face of the support (16).

4. Moulding unit according to any one of the preceding claims, **characterized in that** the fluid-pressure compensating means are produced in the form of an inflatable flexible cushion (30) inserted between a rear face of the half-mould (12) considered and a front face of the associated support (16).

5. Moulding unit according to Claim 4, **characterized in that**, in transverse projection, the cushion (30) lies in such a way as to cover practically the entire surface of the transverse projection of the half-mould (12) .

6. Moulding unit according to either one of Claims 4 and 5, **characterized in that**, when the supports (15, 18) are in the closed position, the moulding unit (10) is able to perform blowing, and **in that** the inflatable cushion (30) commands the movement of the half-mould (12) from its retreated position to its forward position after the two supports (16, 18) have been locked in the closed position.

7. Moulding unit according to any one of the preceding claims, **characterized in that** the half-moulds (12, 14) are equipped with precutting means which, when the half-mould (12) is in the forward position, precut the parison according to the outline of the item that is to be formed.

8. Extrusion/blow moulding machine, **characterized in that** it comprises at least one moulding unit (10) according to any one of the preceding claims.
